# EUROPÄISCHE PATENTSCHRIFT

(11) **EP 4 180 696 B1**
(45) Veröffentlichungstag und Bekanntmachung des Hinweises auf die Patenterteilung: **12.03.2025**
(21) Anmeldenummer: 22204288.9
(22) Anmeldetag: 28.10.2022
(51) Int. Cl.: F16K 7/12, F16K 27/02

(54) **FLEXIBLES DRUCKVERTEILUNGSELEMENT**
FLEXIBLE PRESSURE DISTRIBUTION MEMBER
ÉLÉMENT FLEXIBLE DE DISTRIBUTION DE PRESSION

(30) Priorität: 11.11.2021 DE 102021129348
(43) Veröffentlichungstag der Anmeldung: 17.05.2023
(73) Patentinhaber: SISTO Armaturen S.A., 6468 Echternach (LU)
(72) Erfinder: HACKENBERGER, Bernd, 6468 Echternach (LU); LOEW, Pascal, 6468 Echternach (LU); GERLACH, Markus, 6468 Echternach (LU); SICHWARDT, Paul, 6468 Echternach (LU)
(74) Vertreter: Busch, Tobias

(56) Entgegenhaltungen:
- EP-A1- 3 366 961
- WO-A1-2020/203553
- DE-A1- 102018 213 002
- DE-A1- 2 839 804
- DE-B1- 1 500 140
- US-A- 1 647 823

## Beschreibung

Die Erfindung betrifft ein Ventil mit einer Membrananordnung, die eine Membran, ein Druckstück und eine Haube umfasst, wobei zwischen der Membran und dem Druckstück ein Druckverteilungselement angeordnet ist.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängen im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

Die Membran ist zwischen einem Gehäuseunterteil und einem Gehäuseoberteil fest eingespannt. Das Gehäuseoberteil wird auch als Haube bezeichnet und bildet den Überbau mit dem Antrieb der Membran. In der Haube ist die Antriebsspindel, die Abdichtung der Spindel und der Antrieb selbst integriert. Je nach Antrieb weist die Haube eine erhebliche Masse auf, die auf das Gehäuseunterteil einwirkt und in dieses eingeleitet werden muss.

Die Kolbenstange im Membranventil ist ein zylinderförmiges Maschinenelement, das mittels Membranschraube mit der Membran verbunden ist und die Membran in ihrer Position verformt. Die Kolbenstange wird über einen Antrieb in ihrer vorgegebenen Richtung bewegt. Der Antrieb kann händisch, elektrisch, pneumatisch oder hydraulisch angetrieben sein.

Die Membranschraube ist ein stiftartiges Element, das formschlüssig in eine Lage der Membran integriert ist. Die Membranschraube ist über die Kolbenstange mit der Spindel des Antriebs verbunden. Auf diese Weise kann die Membran verformt werden.

Zur Stabilisierung der Membran sind auf der fluidabgewandten Seite und somit auf der haubenzugewandten Seite Abstützanordnungen in Form von auf der Membran aufliegenden Spiralen bekannt, die eine dauerhafte schädigende Verformung in der Offenstellung teilweise kompensieren können.

Die DE 28 39 804 offenbart ein Membranventil mit einer an ihrem Rand zwischen dem Ventilgehäuse und einer darauf befestigten Haube eingespannten Membran, die über ein Druckstück an einer im Ventilgehäuse vorgesehenen Sitzfläche zur dichtenden Anlage zu bringen ist, während in der Haube radiale, in Ausnehmungen des Druckstückes hineinragende Rippen angeordnet sind, deren Stirnflächen in ihrer Kontur der voll geöffneten Membran entsprechen, wobei zwischen diesen Stirnflächen und dem Druckstück auf der einen und der Membran auf der anderen Seite eine sich der Kontur der Stirnflächen und des Druckstückes weitgehend anpassende Membranstütze angeordnet ist. Die Membranstütze wird durch eine Spirale mit geringem Zwischenraum zwischen den Windungen gebildet.

Die WO 2020/203553 A1 beschreibt eine Membran mit darin vorgesehenen Durchgangslöchern, deren Durchmesser größer ist als der Durchmesser, durch den ein Bolzen bequem hindurchgehen kann. In die Durchgangslöcher sind metallene Bolzeneinführungsrohre eingepasst, die in die Bolzen eingeführt werden können. Die Höhe der Bolzeneinführungsrohre ist gleich oder geringer als die Höhe der Durchgangslöcher.

Die US 1 647 823 offenbart Ventil, das eine Ventilkammer, eine flexible Membran, die eine Wand der Kammer verschließt und bildet, einen Ventilschaft, der an der Membran befestigt ist, ein stationäres ringförmiges Element an der Außenseite der Membran und mit nach außen geneigten stationären Armen, die sich zu dem Ventilschaft hin erstrecken, nach oben geneigte Arme, die an dem Schaft befestigt sind und sich zwischen den stationären Armen erstrecken, und konzentrische Drähte an der Außenseite der Membran, die die Membran tragen und von den stationären Armen gehalten werden, umfasst.

Die DE 10 2018 213 002 A1 zeigt eine Vorrichtung zur Diagnose einer Membran eines Membranventils oder einer Membranpumpe umfassend ein erstes Bauteil, bestehend aus einer in einem Gehäuse vorgesehenen Membran, wobei ein Teil der Membran aus dem Gehäuse herausragt, und ein zweites Bauteil, bestehend aus einem Datenerfassungsgerät, wobei in der Membran mindestens ein Sensor zur Erfassung von Betriebsparametern vorgesehen ist, wobei zwischen der Membran und dem Datenerfassungsgerät ein Übertrager vorgesehen ist.

Die DE 1 500 140 betrifft ein Membranventil mit einer zwischen Ventilgehäuseunterteil und Gehäuseoberteil eingespannten, in ihrer Mitte über ein Druckstück mit der Ventilspindel verbundenen Membran, mit am Gehäuseoberteil vorgesehenen, radial ins Innere derselben ragenden, feststehenden Rippen und am Druckstück vorgesehenen, auf Lücke zu den festen Rippen stehenden Armen, wobei die der Membran zugewandten Kanten der Rippen konkav geformte, zur Spindelachse aufsteigende Druckflächen darstellen, während die korrespondierenden Kanten Arme am Druckstück konvex zur Spindelachse absteigende Anlageflächen bilden.

Die EP 3 366 961 B1 beschreibt ein Ventil mit einer Membran, die einen Rand aufweist, der in einer Kammerung angeordnet ist, die von einem Gehäuseteil und einer Haube gebildet wird. Zwischen dem Druckstück und der Membran ist ein Druckverteilungselement in Form einer Abstützspirale angeordnet, um die Membran in der Offenstellung abzustützen.

Bisher werden solche Druckverteilungselemente bzw. Abstützspiralen aufgrund ihrer Steifigkeit jedoch nur in ausreichend großen Membranventilen eingesetzt. Die Membranen kleinerer Ventilbaureihen erfahren nur eine bedingte Abstützung durch ein eventuell vorhandenes Druckstück und neigen zu einem schnelleren Verschleißverhalten bzw. einem häufigeren Auftreten einer Schädigung durch das Relaxieren des Elastomers unter den gegebenen Temperaturen und Drücken im Vergleich zu Membranen größerer Ventilbaureihen, die mit einer Abstützspirale abgestützt werden.

Aufgabe der Erfindung ist es, ein Membranventil bereitzustellen, das die Membran möglichst gut vor einer Schädigung schützt. Dabei soll die Membran durch eine ganzheitliche Abstützung vor Schädigungen durch Verformungen bewahrt werden. Darüber hinaus soll das Membranventil den Anforderungen des dauerhaften Betriebes gerecht werden und dabei äußerst langlebige Eigenschaften bewahren. Das Membranventil soll sich auf möglichst preiswerte sowie besonders einfache Weise herstellen lassen.

Diese Aufgabe wird erfindungsgemäß durch ein Ventil mit einer Membrananordnung gemäß den Merkmalen des Anspruchs 1 gelöst. Bevorzugte Varianten sind den Unteransprüchen, der Beschreibung und den Zeichnungen zu entnehmen.

Gemäß der Erfindung ist das Druckverteilungselement als flexible Ringanordnung ausgebildet, wobei die Ringanordnung ein inneres Ringsegment und ein äußeres Ringsegment umfasst und die Ringanordnung als ein endloser Ring und als geschlossenes Konstrukt ausgebildet ist, wobei das äußere Ringsegment in Umfangsrichtung zunehmend breiter wird, bis sich aus dem äußeren Ringsegment an der breitesten Stelle des äußeren Ringsegments ein Spiralsegment abzweigt, wobei das Spiralsegment in gleichmäßiger Breite verläuft und in das innere Ringsegment an der breitesten Stelle des inneren Ringsegments mündet.

Eine Ringanordnung ist vorzugsweise kreisförmig ausgebildet und weist eine ringförmige Öffnung in der Mitte auf, die zur Herstellung einer Wirkverbindung mit dem Druckstück dient. Die Ringanordnung umfasst mindestens ein Ringsegment, das vorzugsweise einen kreisförmigen Querschnitt aufweist. Je nach Größe und Gestalt des Membranventils kann der Querschnitt des Ringsegments bzw. der Ringsegmente an die Aufgabe der Abstützung angepasst sein.

In einer besonders günstigen Variante umfasst die Ringanordnung ein Ringsegment und mindestens ein Spiralsegment. Dabei ist das innere Ringsegment mit einem Spiralsegment verbunden. Vorzugsweise wird das innere Ringsegment in Umfangsrichtung breiter und an der breitesten Stelle entspringt das Spiralsegment aus dem inneren Ringsegment, das sich dann spiralförmig fortsetzt.

Die Ringanordnung umfasst zusätzlich ein äußeres Ringsegment. Dabei ist das innere Ringsegment über ein Spiralsegment mit dem äußeren Ringsegment verbunden. Das Spiralsegment mündet im äußeren Ringsegment, wodurch die Ringanordnung mit nahtlosen Übergängen der einzelnen Segmente ausgeführt ist. Das äußere Ringsegment ist idealerweise zur Anlage an die Haube sowie zur Abstützung der Spirale bis zur Kammerung oder Einspannung der Membran ausgeformt.

Zudem können das innere und das äußere Ringsegment als auch das Spiralsegment aus dem gleichen Werkstoff ausgebildet sein. Zur gezielten Einstellung der Flexibilität des Druckverteilungselements können die Segmente der Ringanordnung auch aus unterschiedlichen Werkstoffen gebildet sein. Dazu eignen sich besonders metallische und/oder gummiartige Werkstoffe.

Bei einer alternativen Variante der Erfindung kann das Spiralsegment als eingängige oder mehrgängige Drahtspirale ausgeführt sein, in dem ein oder zwei Drähte übereinander zu einer Spirale gewickelt werden.

Zur Einstellung der Steifigkeit sowie der Elastizität des Druckverteilungselements können die Segmente der Ringanordnung auch als hohle Segmente ausgeführt sein. Das ist besonders leicht durch die generative Fertigung der Ringanordnung zu erzielen.

In einer weiteren vorteilhaften Variante weisen die Segmente eine unterschiedliche Höhe und Breite zur Einstellung der Steifigkeit sowie der Elastizität des Druckverteilungselements auf. Besonders vorteilhaft kann dabei die gleichförmige Ausgestaltung des inneren und des äußeren Ringsegments sein, wobei ein oder mehrere Spiralsegmente mit deutlich kleinerem Querschnitt zwischen dem äußeren und inneren Ringsegment angeordnet ist/sind.

Vorteilhafterweise weist die Ringanordnung, vorzugsweise das innere Ringsegment und das Druckstück, eine Wirkverbindung auf. Dabei kann die Wirkverbindung als kraft- und/oder formschlüssige Verbindung ausgeführt sein. Dadurch erfährt die Ringanordnung die Bewegung zur Membranverformung gleichermaßen wie die Membran selbst und stützt dabei die Membran zum Schutz gezielt ab.

Idealerweise wird die Abstützung der Membran durch die Ringanordnung gewährleistet, indem die Haube eine Schulter aufweist, die mit der Ringanordnung in einer Wirkverbindung steht. Vorzugsweise ist die Schulter als Anschlagsfläche für die Ringanordnung ausgeführt, die die Abstützung, insbesondere in der Offenstellung der Membran, gewährleistet.

In einer günstigen Variante der Erfindung ist die Ringanordnung zumindest teilweise aus einem elastischen Werkstoff gebildet. Dazu kann das innere Ringsegment und/oder das äußere Ringsegment und/oder das Spiralsegment aus einem gummiartigen, elastomeren Werkstoff gebildet sein. In einer weiteren Variante kann auch die gesamte Ringanordnung aus einem elastomeren Werkstoff ausgebildet sein.

Je nach Materialausführung und -kombination ist das innere und/oder das äußere Ringsegment kraft-, stoff- oder formschlüssig mit dem Spiralsegment verbunden.

In einer besonders günstigen Variante ist die Ringanordnung generativ erzeugt. Unter generativen bzw. additiven Fertigungsverfahren versteht man Verfahren, bei denen Material Schicht für Schicht aufgetragen wird, um eine dreidimensionale Struktur der Ringanordnung zu erzeugen. Gemäß der Erfindung ist die Ringanordnung als generativ gefertigte Struktur ausgebildet. Für die Ausbildung der Ringanordnung werden insbesondere das selektive Laserschmelzen und das Cladding, auch bekannt als Auftragsschweißen, angewandt. In einer alternativen Variante der Erfindung ist auch das Extrudieren in Kombination mit dem Auftragen von schmelzfähigem Kunststoff ein anwendbares Verfahren.

Vorzugsweise ist die Ringanordnung einstückig ausgebildet, wobei innerhalb der Ringanordnung Aussparungen zur Steigerung der Elastizität angeordnet sind. Die Aussparungen können insbesondere durch ein Laserverfahren in einem metallischen oder elastomeren Werkstoff, beispielsweise als Schnitte, ausgebildet werden. Dabei können die Aussparungen den identischen, spiralförmigen Verlauf des Spiralsegments aufweisen. Durch die Anzahl der Aussparungen kann die Flexibilität der Ringanordnung gezielt auf die Bedürfnisse des jeweiligen Membranventils angepasst werden, um die Abstützung der Membran zur Steigerung der Einsatzdauer sicherzustellen. Gleichzeitig ist die einstückige Ausführung der Ringanordnung besonders montagefreundlich, sowohl bei der Erstmontage als auch bei einem intervallbasierten Membrantausch.

In einer besonders günstigen Variante der Erfindung sind die Aussparungen in Form von Schnitten ausgebildet.

Durch die besonders flexible und nachgiebige Ausgestaltung der Ringanordnung ist das Druckverteilungselement besonders geeignet für kleinere Ventilbaureihen. Die Dicke der Ringanordnung kann auf die gewünschte Steifigikeit gezielt angepasst werden. Weiterhin kann das Spiralsegment insbesondere mehrgängig oder teilweise mehrgängig zur gezielten Einstellung der Flexibilität des Druckverteilungselements ausgeführt werden.

Gegenüber Membranen mit einer Gewebeverstärkung ist die Abstützung der Membran mithilfe einer Ringanordnung besser geeignet für die Verwendung bei höheren Drücken und höheren Temperaturen, da der Relaxation des elastomeren Membranwerkstoffs durch die Abstützung wirksam entgegen gewirkt wird und ein schadensfreier Betrieb auch über längere Zeiträume gewährleistet werden kann. Dieser Vorteil trifft auch gegenüber Membranventilen mit einer Teilabstützung der Membran durch das Negativ des Druckstücks in der Haube zu.

Die Ausführung des Druckverteilungselements als flexible Ringanordnung ist gleichermaßen für gekammerte und eingespannte Membrane geeignet.

Weitere Merkmale und Vorteile der Erfindung ergeben sich aus der Beschreibung von Ausführungsbeispielen anhand von Zeichnungen und aus den Zeichnungen selbst.

Dabei zeigt:
- Fig. 1: eine Explosionszeichnung eines Membranventils,
- Fig. 2: eine Schnittdarstellung eines Druckverteilungselements,
- Fig. 3: eine perspektivische Schnittdarstellung des Druckverteilungselements,
- Fig. 4: eine perspektivische Darstellung des Druckverteilungselements,
- Fig. 5: eine Schnittdarstellung eines einfachen Druckverteilungselements.

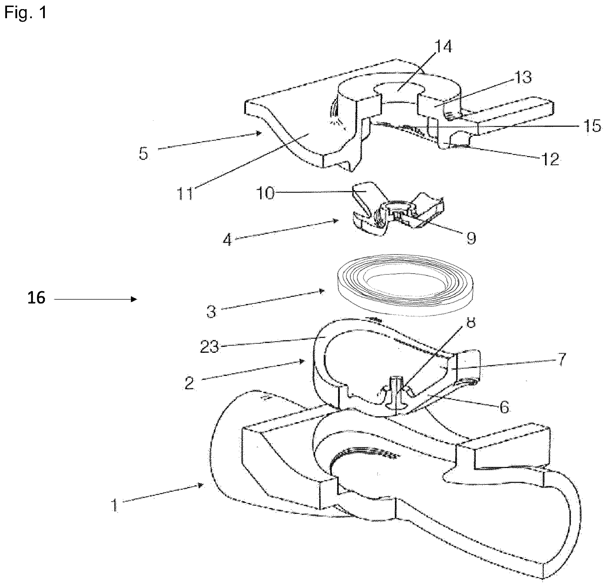

Fig. 1 zeigt eine Explosionszeichnung eines Ventils mit einer Membrananordnung 16. Das Ventil umfasst ein Gehäuseteil 1, eine Membran 2, ein Druckverteilungselement 3, ein Druckstück 4 und eine Haube 5.

In diesem Ausführungsbeispiel ist das Druckverteilungselement 3 im Einsatz einer gekammerten Membran 2 dargestellt. Das erfindungsgemäße Druckverteilungselement 3 ist gleichsam in allen eingespannten Ventilmembranen 2 einsetzbar.

Die Membran 2 ist einstückig aus einem polymeren Material ausgebildet und weist einen flächigen Bereich 6 auf, an den sich ein Rand 7 anschließt. Der flächige Bereich 6 ist nach unten gewölbt ausgebildet. Der Rand 7 erstreckt sich mit Blick auf die Zeichnung in vertikaler Richtung nach oben. Der flächige Bereich 6 ist tellerförmig. Der Rand 7 ist wulstartig ausgebildet.

Der Rand 7 der Membran 2 ragt in vertikaler Richtung nach oben und weist auf seiner Oberseite eine umlaufende Stirnfläche 23 auf. Die Stirnfläche 23 ist gewölbt ausgebildet. Somit liegt die Stirnfläche 23 des Randes 7 der Membran 2 nicht in einer horizontalen Ebene, sondern ist in vertikaler Richtung gekrümmt. Die Wölbung der Stirnfläche 23 weist im Bereich des Membransteges bzw. des Membranwehrs ihren tiefsten Punkt auf und steigt dann zu beiden Seiten hin an, sodass im Eintrittsbereich die Stirnfläche 23 des Randes 7 der Membran 2 die höchste Erhebung hat, dann stetig abnimmt bis zu dem Ventilsitz bzw. dem Steg oder dem Wehr und dann wieder zum Austritt hin ansteigt und dann wieder auf die gleiche Höhe zunimmt. Die Wölbung der Stirnfläche 23 des Randes 7 der Membran 2 verläuft somit parallel zur Strömungsrichtung.

Im Ausführungsbeispiel ist die Membran 2 so ausgebildet, dass in der geschlossenen Stellung die geringste Spannung im Material der Membran 2 wirkt. Bei einer Öffnung des Ventils wird die Membran 2 verformt und die Spannung im Membranmaterial steigt an. In der Membran 2 ist formschlüssig ein Element eingebettet, das mit einem nicht dargestellten Antrieb zur Verformung der Membran 2 in Verbindung steht. Bei dem Element 8 handelt es sich im Ausführungsbeispiel um eine Membranschraube. Das Element 8 steht mit einem Druckstück 4 in Verbindung. Das Druckstück 4 kann innerhalb der Haube in vertikaler Richtung mittels eines nicht dargestellten Antriebs verschoben werden. Das Druckverteilungselement 3 verteilt den vom Druckstück 4 ausgeübten Druck auf den flächigen Bereich 6 der Membran 2. Das Druckverteilungselement 3 ist im Ausführungsbeispiel als Ringanordnung 30 ausgebildet.

Das Druckstück 4 weist eine innere Öffnung 9 zur Verbindung mit einem Antrieb auf. Nach außen erstrecken sich vier Ausleger 10, sodass das Druckstück 4 in der Draufsicht kreuzförmig ausgebildet ist. Die Haube 5 weist einen flächigen Bereich 11 auf, der nach unten gewölbt ausgebildet ist. Nach unten erstreckt sich eine umlaufende Erhebung 12. Mittig weist die Haube 5 einen hohlzylinderförmig ausgebildeten Hals 13 auf mit einer kreisförmigen Öffnung 14 für nicht dargestellte Antriebselemente, wie beispielsweise eine Spindel.

Die Haube 5 weist einen Hohlraum 15 auf, in dem das Druckstück 4 in vertikaler Richtung verschieblich angeordnet ist. Dabei wird das Druckverteilungselement 3 von einer begrenzenden Schulter 15 der Haube 5 in der Offenstellung an die Membran 2 gedrückt.

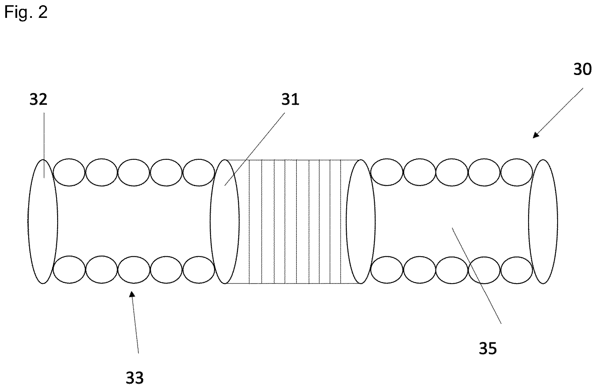

In Fig. 2 ist eine Schnittdarstellung eines Druckverteilungselements 3 in Form einer Ringanordnung 30 dargestellt. Dabei ist das innere Ringsegment 31 über ein oberes und ein unteres Spiralsegment 33 mit dem äußeren Ringsegment 32 verbunden und bildet eine sehr elastische Ringanordnung 30 zur flexiblen Abstützung der Membran 2, insbesondere für kleine Membranventile.

Dazu ist das Spiralsegment 33 als gewickelte Spirale wesentlich dünner als das innere Ringsegment 31 und das äußere Ringsegment 32 ausgebildet und zweiteilig ausgeführt. Der unausgefüllte Hohlraum 35 unterstützt die elastische und nachgiebige Ausbildung der Ringanordnung 30. Weiterhin ist das Spiralsegment 33 generativ als Hohlspirale gefertigt. Das innere Ringsegment 31 ist formschlüssig mit dem nicht dargestellten Druckstück 4 verbunden. Das äußere Ringsegment 33 wird von der nicht dargestellten Schulter 15 der Haube 5 innerhalb des Membranventils positioniert.

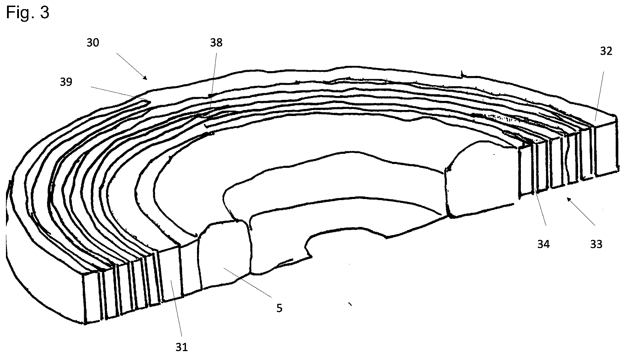

Fig. 3 zeigt eine perspektivische Schnittdarstellung des Druckverteilungselements 3, das als Ringanordnung 30 ausgeführt ist. Die Ringanordnung 30 ist als ein endloser Ring und als geschlossenes Konstrukt ausgebildet. Das äußere Ringsegment 32 wird in Umfangsrichtung zunehmend breiter, bis sich aus dem äußeren Ringsegment 32 an der breitesten Stelle 39 des äußeren Ringsegments 32 ein Spiralsegment 33 abzweigt. Das Spiralsegment 33 verläuft in gleichmäßiger Breite und mündet in das innere Ringsegment 31 an der breitesten Stelle 38 des inneren Ringsegments 31.

Die Ringanordnung 30 ist aus einem metallischen bzw. kunststoffartigen Werkstoff ausgebildet. Die Aussparungen 34 im Spiralsegment 33 sind mithilfe eines Lasers zur elastischen und nachgiebigen Ausbildung der Ringanordnung 30 ausgebildet. Das innere Ringsegment 31 schließt formschlüssig an das teilweise dargestellte Druckstück 5 an und bildet somit eine Einheit zur Verformung sowie zur Abstützung der Membran 2.

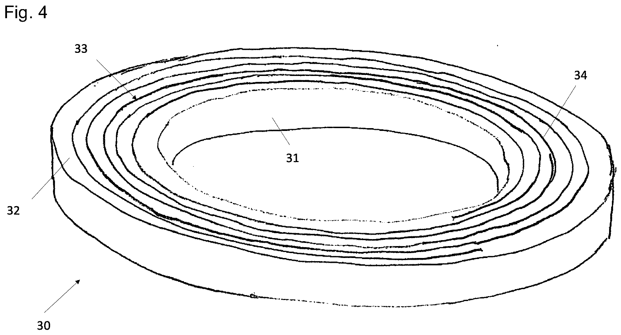

Fig. 4 zeigt eine perspektivische Darstellung des Druckverteilungselements 3 im Ausführungsbeispiel einer Ringanordnung 30. Die Ringanordnung 30 ist als ein geschlossenes Konstrukt generativ aus einem metallischen Werkstoff gefertigt. Das Spiralsegment 33 entspringt durch das Anordnen einer Aussparungen 34 aus dem inneren Ringsegment 31 und mündet durch das Enden der Aussparungen 34 im äußeren Ringsegment 32. Die spiralige und gleichzeitig hohle Ausbildung der Ringanordnung 30 führt zu einem sehr flexiblen und nachgiebigen Druckverteilungselement 3, das auch in kleineren Membranventilen zur Abstützung der Membran 2 eingesetzt werden kann und dabei ausreichend beweglich ausgebildet ist. Die Ringanordnung 30 ist durch das innere Ringsegment 31 kraftschlüssig mit dem nicht dargestellten Druckstück 5 verbunden.

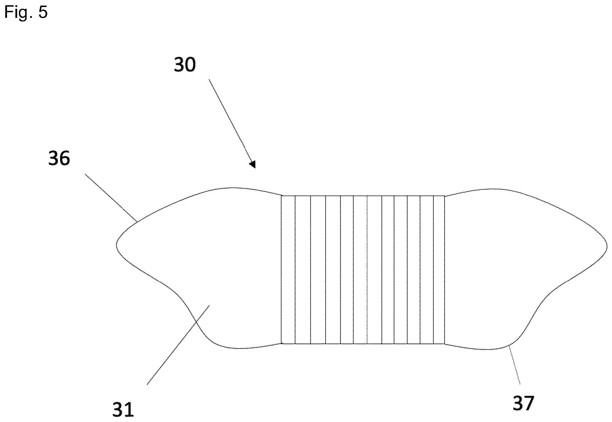

In Fig. 5 ist eine Schnittdarstellung eines einfachen Druckverteilungselements 3 in Form einer Ringanordnung 30 dargestellt. Die Ringanordnung 30 ist im Wesentlichen auf das innere Ringsegment 31 reduziert. Zur Auflage und zur Abstützung auf der Membran 2 weist das innere Ringsegment 31 eine untere Wölbung 37 auf und zur Anlage an der Schulter 15 der Haube 5 weist das innere Ringsegment 31 eine obere Wölbung 36 auf. Die dargestellte Ringanordnung 30 ist aus einem metallischen Werkstoff ausgebildet. In einer alternativen Variante kann die Ringanordnung 30 auch aus einem Kunststoff gebildet sein. Das innere Ringsegment 31 kann form- und/oder kraftschlüssig mit dem Druckstück 4 verbunden sein. Alternativ könnte die Ringanordnung 30 auch lose eingelegt sein.

## Patentansprüche

1. Ventil mit einer Membrananordnung (16), die eine Membran (2), ein Druckstück (4) und eine Haube (5) umfasst, wobei zwischen der Membran (2) und dem Druckstück (4) ein Druckverteilungselement (3) angeordnet ist, wobei
das Druckverteilungselement (3) als flexible Ringanordnung (30) ausgebildet ist, wobei die Ringanordnung (30) ein inneres Ringsegment (31) und ein äußeres Ringsegment (32) umfasst **dadurch gekennzeichnet, dass**
die Ringanordnung (30) als ein endloser Ring und als geschlossenes Konstrukt ausgebildet ist, wobei das äußere Ringsegment (32) in Umfangsrichtung zunehmend breiter wird, bis sich aus dem äußeren Ringsegment (32) an der breitesten Stelle (39) des äußeren Ringsegments (32) ein Spiralsegment (33) abzweigt, wobei das Spiralsegment (33) in gleichmäßiger Breite verläuft und in das innere Ringsegment (31) an der breitesten Stelle (38) des inneren Ringsegments (31) mündet.
2.
3.

2. Membranventil nach Anspruch 1, **dadurch**
**gekennzeichnet, dass** die Ringanordnung (30) und das Druckstück (4) eine Wirkverbindung aufweisen.

3. Membranventil nach einem der Ansprüche 1 oder 2, **dadurch**
**gekennzeichnet, dass** die Haube (5) eine Schulter (15) aufweist, die mit der Ringanordnung (30) in einer Wirkverbindung steht.

4. Membranventil nach einem der Ansprüche 1 bis 3, **dadurch**
**gekennzeichnet, dass** die Ringanordnung (30) zumindest teilweise aus einem elastischen Werkstoff gebildet ist.

5. Membranventil nach einem der Ansprüche 1 bis 4 **dadurch**
**gekennzeichnet, dass** das innere Ringsegment (31) und/oder das äußere Ringsegment (32) kraftschlüssig und/oder stoffschlüssig und/oder formschlüssig mit dem Spiralsegment (33) verbunden ist.

6. Membranventil nach einem der Ansprüche 1 bis 5, **dadurch**
**gekennzeichnet, dass** die Ringanordnung (30) generativ erzeugt ist.

7. Membranventil nach einem der Ansprüche 1 bis 6, **dadurch**
**gekennzeichnet, dass** die Ringanordnung (30) einstückig ausgebildet ist, wobei innerhalb der Ringanordnung (30) Aussparungen (34) zur Steigerung der Elastizität angeordnet sind.

## Claims

1. Valve having a diaphragm arrangement (16), which diaphragm arrangement comprises a diaphragm (2) and a pressure piece (4) and a cover (5), wherein a pressure-distribution element (3) is arranged between the diaphragm (2) and the pressure piece (4), wherein the pressure-distribution element (3) is in the form of a flexible ring arrangement (30), wherein the ring arrangement (30) comprises an inner ring segment (31) and an outer ring segment (32), **characterized in that**
the ring arrangement (30) is in the form of an endless ring with a closed construction, wherein the outer ring element (32) increases in width in a circumferential direction until a spiral segment (33) branches off from the outer ring segment (32) at the widest point (39) of the outer ring segment (32), wherein the spiral segment (33) runs with a uniform width and opens out into the inner ring segment (31) at the widest point (38) of the inner ring segment (31).

2. Diaphragm valve according to Claim 1, **characterized in that** the ring arrangement (30) and the pressure piece (4) have an operative connection.

3. Diaphragm valve according to either of Claims 1 and 2,
**characterized in that** the cover (5) has a shoulder (15) which is in operative connection with the ring arrangement (30).

4. Diaphragm valve according to one of Claims 1 to 3, **characterized in that** the ring arrangement (30) is formed at least partially from an elastic material.

5. Diaphragm valve according to one of Claims 1 to 4, **characterized in that** the inner ring segment (31) and/or the outer ring segment (32) are/is connected in a force-fitting and/or materially bonded and/or form-fitting manner to the spiral segment (33).

6. Diaphragm valve according to one of Claims 1 to 5, **characterized in that** the ring arrangement (30) is produced generatively.

7. Diaphragm valve according to one of Claims 1 to 6, **characterized in that** the ring arrangement (30) is of single-part design, wherein cutouts (34) are arranged within the ring arrangement (30) for the purpose of increasing the elasticity.

## Revendications

1. Soupape comportant un agencement à membrane (16), qui comprend une membrane (2), une pièce de pression (4) et une coiffe (5), un élément de répartition de pression (3) étant agencé entre la membrane (2) et la pièce de pression (4), l'élément de répartition de pression (3) étant réalisé sous forme d'agencement annulaire (30) flexible, l'agencement annulaire (30) comprenant un segment annulaire (31) intérieur et un segment annulaire (32) extérieur,
**caractérisée en ce que**
l'agencement annulaire (30) est réalisé sous la forme d'un anneau sans fin et sous forme de construction fermée, le segment annulaire (32) extérieur étant de plus en plus large dans la direction périphérique, jusqu'à ce qu'un segment en spirale (33) bifurque à partir du segment annulaire (32) extérieur à l'endroit le plus large (39) du segment annulaire (32) extérieur, le segment en spirale (33) s'étendant avec une largeur uniforme et débouchant dans le segment annulaire (31) intérieur à l'endroit le plus large (38) du segment annulaire (31) intérieur.

2. Soupape à membrane selon la revendication 1, **caractérisée en ce que** l'agencement annulaire (30) et la pièce de pression (4) présentent une liaison fonctionnelle.

3. Soupape à membrane selon l'une des revendications 1 ou 2, **caractérisée en ce que** la coiffe (5) présente un épaulement (15) qui est en liaison fonctionnelle avec l'agencement annulaire (30).

4. Soupape à membrane selon l'une des revendications 1 à 3, **caractérisée en ce que** l'agencement annulaire (30) est formé au moins partiellement à partir d'une matière élastique.

5. Soupape à membrane selon l'une des revendications 1 à 4, **caractérisée en ce que** le segment annulaire (31) intérieur et/ou le segment annulaire (32) extérieur est/sont relié(s) au segment en spirale (33) par force et/ou par liaison de matière et/ou par complémentarité de formes.

6. Soupape à membrane selon l'une des revendications 1 à 5, **caractérisée en ce que** l'agencement annulaire (30) est produit de manière générative.

7. Soupape à membrane selon l'une des revendications 1 à 6, **caractérisée en ce que** l'agencement annulaire (30) est réalisé d'une seule pièce, des évidements (34) servant à augmenter l'élasticité étant agencés à l'intérieur de l'agencement annulaire (30).
